# DEMANDE DE BREVET EUROPEEN

(11) **EP 1 220 155 A2**
(43) Date de publication de la demande: **03.07.2002**
(21) Numéro de dépôt: 01204957.3
(22) Date de dépôt: 18.12.2001
(51) Int. Cl.: G06T 7/00

(54) **Methode de traitement d'images**

(30) Priorité: 26.12.2000 FR 0017044
(71) Demandeur: Koninklijke Philips Electronics N.V., 5621 BA Eindhoven (NL)
(72) Inventeur: Breitenstein, Jacques, 75008 Paris (FR); Florent, Raoul, 75008 Paris (FR)
(74) Mandataire: Chaffraix, Jean

(57) **Abrégé**

Une méthode de traitement d'images dans des images contenant des structures filiformes, comprend en parallèle une étape de filtrage desdites images et une étape de décision destinée à sélectionner les pixels d'images appartenant à une structure filiforme, comprenant en parallèle une sous-étape d'estimation de la direction de chaque pixel d'image ainsi qu'une sous-étape d'analyse de connectivité de pixels voisins basée sur leurs directions à la sortie de la sous-étape d'estimation de la direction de chaque pixel d'image et une sous-étape de sélection de groupes de pixels, en fonction du résultat de la sous-étape d'analyse de connectivité de pixels voisins basée sur leurs directions, à la sortie de l'étape de filtrage.
Une telle méthode permet la sélection des structures filiformes, qu'elles soient fines comme un cathéter dans une image médicale, ou plus épaisses comme une structure arborescente de vaisseaux sanguins. Cette méthode peut être appliquée, par exemple, dans des appareils d'imagerie médicale pour la détection d'anomalies d'artère telles que les sténoses ou la maladie coronaire diffuse.

## Description

### DOMAINE TECHNIQUE

L'invention concerne une méthode de traitement d'images dans des images contenant des structures filiformes, comprenant en parallèle une étape de filtrage desdites images et une étape de décision destinée à sélectionner les pixels d'images appartenant à une structure filiforme. L'invention concerne également un programme d'ordinateur destiné à la mise en oeuvre de cette méthode ainsi qu'un appareil d'imagerie médicale comprenant un dispositif d'acquisition d'images et un système de traitement de ces images selon ladite méthode. L'invention peut être appliquée, par exemple, dans l'industrie de l'imagerie médicale.

### ETAT DE LA TECHNIQUE ANTERIEURE

De nombreuses images contiennent des structures filiformes intéressantes. C'est le cas des images médicales, où ces structures filiformes intéressantes peuvent être des vaisseaux sanguins ou un cathéter. Le diamètre typique d'un cathéter varie entre 1 et 3 pixels et le diamètre typique d'un vaisseau sanguin entre 5 et 20 pixels.

Un système de traitement d'images sur une séquence d'images acquise par fluoroscopie aux rayons X est décrit dans le brevet US5809105. Ce système comprend un dispositif d'acquisition d'images numériques, un dispositif de filtrage utilisant un filtre gaussien destiné à éliminer le bruit provoqué par les fluctuations aléatoires du signal électrique lors de l'acquisition de la séquence d'images et un dispositif de détection destiné à distinguer les pixels appartenant à une structure intéressante des pixels appartenant au fond d'image. Ce dispositif de détection est basée sur une méthode de détection des contours utilisant le gradient et ne permet pas une bonne sélection des structures filiformes intéressantes, qui sont généralement difficiles à distinguer dans une image de fluoroscopie, car la puissance des rayons X utilisés est faible et donc l'image très bruitée.

### EXPOSE DE L'INVENTION

Un premier but de l'invention est de proposer une méthode permettant d'améliorer la sélection des structures filiformes intéressantes dans des images.

Selon l'invention, une méthode de traitement d'images telle que définie dans le paragraphe d'ouverture comprend les caractéristiques suivantes. L'étape de décision comprend, en parallèle, une sous-étape d'estimation de la direction de chaque pixel d'image ainsi qu'une sous-étape d'analyse de connectivité de pixels voisins basée sur leurs directions à la sortie de la sous-étape d'estimation de la direction de chaque pixel d'image et une sous-étape de sélection de groupes de pixels, en fonction du résultat de la sous-étape d'analyse de connectivité de pixels voisins basée sur leurs directions, à la sortie de l'étape de filtrage.

Un avantage de cette méthode est qu'elle permet d'éliminer des fausses alarmes tout en conservant les structures filiformes intéressantes. Cette méthode est robuste et produit des résultats stables sur de nombreux types d'images. Un autre avantage de cette méthode est qu'elle permet de sélectionner des structures filiformes épaisses, ce qui représente un intérêt en imagerie médicale où certaines structures comme des vaisseaux sanguins sont des structures filiformes épaisses.

Un deuxième but de l'invention est de proposer un programme d'ordinateur et un système de traitement d'images destinés à la mise en oeuvre de cette méthode.

Un troisième but de l'invention est de proposer un appareil d'imagerie médicale comprenant un dispositif d'acquisition d'images et un dispositif permettant de mettre en oeuvre ladite méthode.

L'invention prend les aspects suivants en considération. La sélection de structures filiformes intéressantes dans des images est souvent difficile. C'est le cas dans les images médicales, qui peuvent être acquises, par exemple, par fluoroscopie aux rayons X ou par résonance magnétique.

Le principe suivant permet d'améliorer la sélection des structures filiformes intéressantes dans une image. Une image numérique, constituée par un tableau de valeurs correspondant aux niveaux de gris de chaque pixel, est filtrée grâce à un filtre dont le rôle est de sélectionner une grande partie des structures filiformes de l'image. La nature du filtre n'est pas critique, dès lors qu'il remplit ce rôle. Ce filtre peut également effectuer un seuillage de l'image filtrée, afin d'effectuer une première sélection de pixels, dans le but de réduire le nombre de pixels à traiter dans les étapes suivantes. Ce filtrage joue à la fois le rôle du dispositif de filtrage et du dispositif de détection décrit en référence à l'art antérieur.

Parallèlement à ce filtrage, une estimation de direction est réalisée sur chaque pixel de l'image numérique. Par exemple, on peut mesurer la direction tangentielle d'un pixel. En effet, les pixels voisins appartenant à une même structure filiforme auront des directions tangentielles proches. Cette estimation de la direction de chaque pixel permet d'obtenir une image de direction, qui contient pour chaque pixel un numéro de secteur angulaire correspondant à sa direction. Une analyse de connectivité de pixels voisins basée sur leurs directions est réalisée sur l'image de direction, grâce aux numéros de secteur angulaire contenus dans cette image de direction. Le but de cette analyse de connectivité de pixels voisins est d'obtenir une image connectée où les pixels voisins ayant des numéros de secteur angulaire proches sont connectés entre eux. Une sélection de groupes de pixels est ensuite appliquée, à partir de cette image connectée, sur l'image filtrée, afin d'éliminer ou de conserver certains groupes de pixels en fonction d'un paramètre réglable. Par rapport à une détection de contour basée sur une méthode de gradient, la méthode décrite dans l'invention permet une sélection plus fine des groupes de pixels appartenant à une structure intéressante et ainsi d'éliminer une grande partie des fausses alarmes. En effet, alors qu'une méthode de gradient permet de sélectionner tous les points d'une image présentant un certain contraste avec leurs plus proches voisins, sans tenir compte des voisins plus éloignés, la méthode décrite dans l'invention permet de tenir compte des voisins plus éloignés, ce qui est important dans la détection des structures filiformes, qui s'étendent généralement sur une longueur de plusieurs dizaines de pixels.

On obtient ainsi une image dans laquelle les structures filiformes intéressantes sont sélectionnées. Il est important de noter que les structures présentant un intérêt dans une image ne seront pas toujours les mêmes suivant l'application. Par exemple, dans une image médicale représentant une structure arborescente de vaisseaux sanguins, l'opérateur pourra avoir intérêt à sélectionner le cathéter, dont le diamètre est inférieur aux vaisseaux principaux. Le fait d'utiliser des paramètres réglables, éventuellement par l'opérateur, permet de sélectionner des structures filiformes de différentes épaisseurs, suivant l'application considérée.

L'invention et des caractéristiques additionnelles qui peuvent être utilisées avec avantage pour mettre en oeuvre l'invention, seront décrites ci-dessous plus en détail par référence à des figures schématiques.

### BREVE DESCRIPTION DES FIGURES

La figure 1 est un diagramme conceptuel illustrant les caractéristiques de l'invention ;

La figure 2 illustre un exemple de filtre destiné à sélectionner des structures filiformes dans une image ;

Les figures 3a à 3d illustrent une technique basée sur l'utilisation du Hessien destinée à l'estimation de la direction de chaque pixel d'image;

La figure 4 illustre un exemple de dispositif d'analyse de connectivité de pixels voisins basée sur leurs directions ;

Les figures 5a et 5b sont des diagrammes bloc illustrant respectivement un système de traitement d'images et un appareil d'imagerie médicale destinés à la mise en oeuvre de l'invention ;

La figure 6a est un diagramme bloc illustrant une technique de détection d'anomalies d'artères à partir d'une image numérisée, qui représente un mode de réalisation avantageux de l'invention ;

La figure 6b illustre un exemple de calcul de diamètre d'artère ;

La figure 7 est un diagramme bloc illustrant une technique de détection d'anomalies d'artères à partir de deux images numérisées distinctes, destinée à la mise en oeuvre de l'invention ;

### MODE DE REALISATION DE L'INVENTION

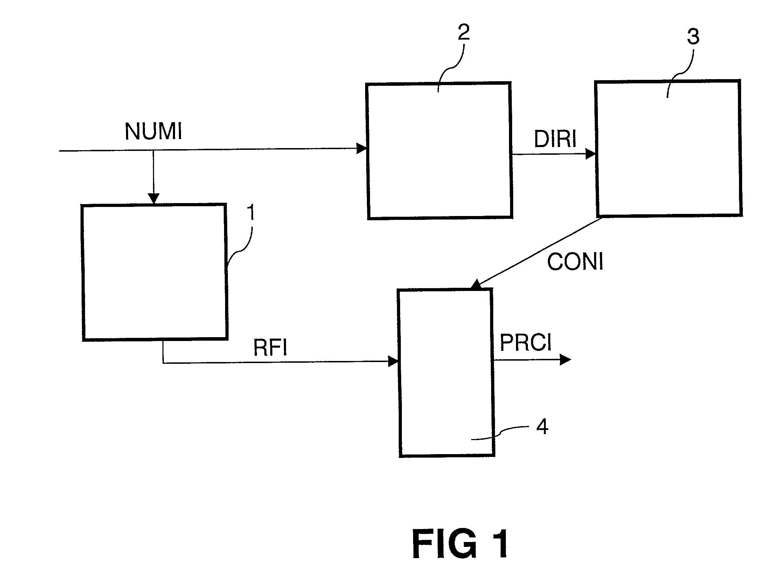

La figure 1 est un diagramme bloc illustrant les caractéristiques de l'invention. Une méthode de traitement d'images comprend une étape de filtrage réalisée par un filtre 1, une sous-étape d'estimation de la direction de chaque pixel d'image réalisée par un dispositif d'estimation de direction 2, une sous-étape d'analyse de connectivité de pixels voisins réalisée par un dispositif d'analyse de connectivité 3 et une sous-étape de sélection de groupes de pixels réalisée par un dispositif de sélection 4.

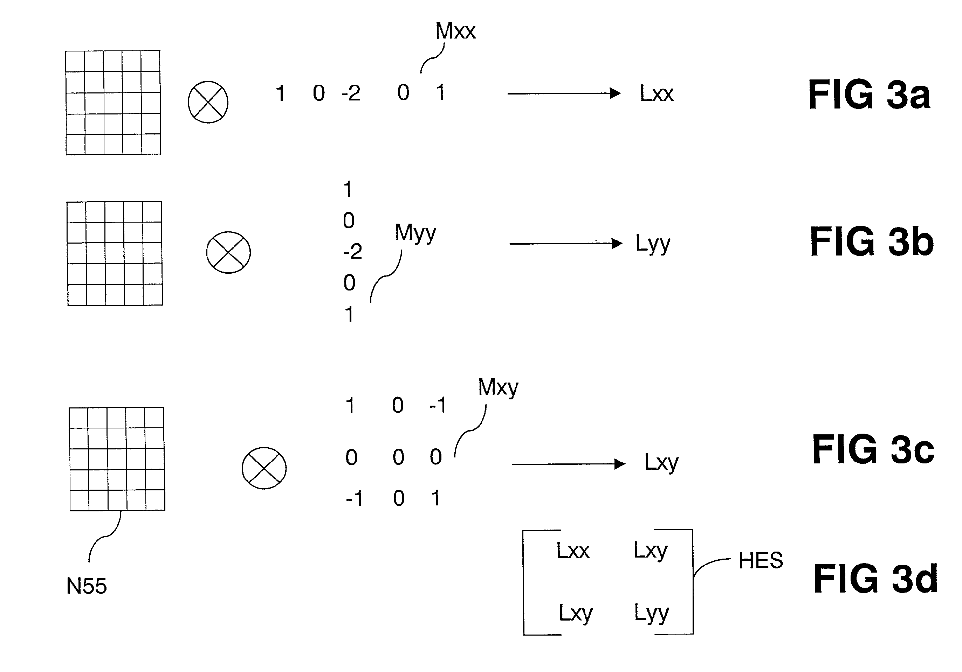

Une image numérisée NUMI est appliquée au filtre 1. Une image filtrée RFI est obtenue, dans laquelle une grande partie des structures filiformes de l'image numérisée NUMI est sélectionnée. Parallèlement, l'image numérisée NUMI est appliquée au dispositif d'estimation de direction 2. Une image de direction DIRI est obtenue, qui contient un ensemble de numéros de secteur angulaire correspondant aux directions de tous les pixels de l'image numérisée NUMI. Le dispositif d'analyse de connectivité 3 a pour entrée l'image de direction DIRI. Le fonctionnement de ce dispositif d'analyse de connectivité 3 sera précisé en détail sur la figure 3. Ce dispositif d'analyse de connectivité 3 permet d'obtenir une image connectée CONI dans laquelle les pixels de l'image de direction DIRI sont connectés ou non en fonction de leurs numéros de secteur angulaire. L'image filtrée RFI est ensuite appliquée au dispositif de sélection 4, qui permet d'effectuer une sélection des pixels de l'image filtrée RFI appartenant à une structure filiforme intéressante, en fonction de l'image connectée CONI. On obtient ainsi une image traitée PRCI.

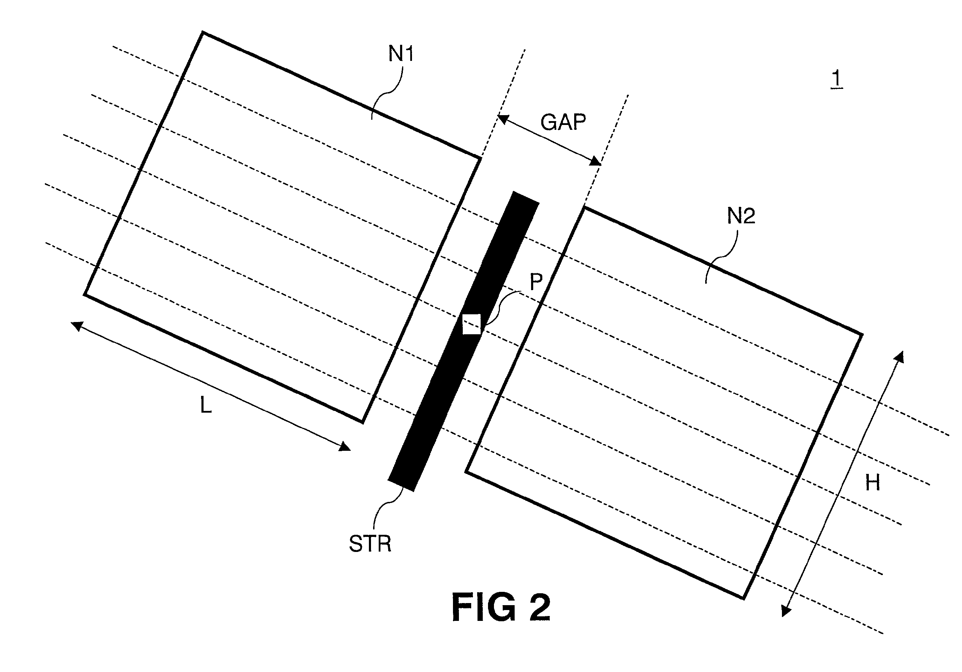

La figure 2 illustre un exemple de filtre 1 destiné à sélectionner les structures filiformes dans une image. Dans l'exemple illustré sur cette figure, le filtre 1 s'applique sur un pixel P de l'image NUMI appartenant à une structure filiforme STR. Il faut noter que le filtre 1 s'applique de la même façon sur tous les pixels de l'image NUMI. En outre, dans la description des figures 2 à 4, les structures filiformes que l'on désire sélectionner sont sombres par rapport au fond d'image. Un premier voisinage N1 de hauteur H et de longueur L est considéré d'un côté du pixel P. Un second voisinage N2 de mêmes dimensions est considéré de l'autre côté du pixel P. La taille de ces voisinages N1 et N2 est déterminée grâce aux paramètres réglables H et L. L'écartement GAP entre le premier voisinage N1 et le second voisinage N2, c'est à dire le nombre de pixels entre ces 2 voisinages, est choisi en fonction de la taille des structures filiformes STR que l'on désire sélectionner. Plus l'épaisseur des structures filiformes STR que l'on désire sélectionner est importante, plus l'écartement GAP entre les deux voisinages N1 et N2 sera choisi important. Par exemple, si l'on désire sélectionner des structures filiformes STR d'épaisseur moyenne un pixel, ce qui pourrait être le cas d'un cathéter dans une image médicale, on choisira un écartement GAP entre les deux voisinages N1 et N2 de l'ordre de deux ou trois pixels. Si l'on désire sélectionner des structures filiformes STR d'épaisseur moyenne comprises entre 10 et 20 pixels, ce qui pourrait être le cas d'une structure arborescente de vaisseaux sanguins dans une image médicale, on choisira un écartement GAP entre les deux voisinages N1 et N2 de l'ordre de 20 pixels. Le principe de ce filtre 1 est le suivant. On effectue la somme Σᵤ des niveaux de gris de tous les pixels situés au dessus et en dessous du pixel P sur la hauteur H dans la structure STR. Pour chaque ligne de pixels de longueur L appartenant au voisinage N1, symbolisée par des pointillés, on calcule la moyenne M_{I1} des niveaux de gris de tous les pixels du voisinage N1 présents sur cette ligne. Pour chaque ligne de pixels de longueur L appartenant au voisinage N2, symbolisée par des pointillés, on calcule la moyenne M_{I2} des niveaux de gris de tous les pixels du voisinage N2 présents sur cette ligne. On calcule le minimum min_{I} de M_{I1} et de M_{I2}. On effectue la somme Σᵥ de tous les minimums min_{I} des lignes de pixels de longueur L présentes sur la hauteur H. On calcule enfin la différence C entre Σᵤ et Σᵥ, afin d'obtenir le contraste au pixel P. Cette opération est effectuée pour tous les pixels de l'image NUMI, et on obtient l'image RFI dont la valeur de chaque pixel est égal au contraste C.

L'avantage de ce filtre 1 est qu'il permet de sélectionner des structures filiformes d'épaisseurs choisies et ainsi d'éliminer des structures plus épaisses. Par exemple, en imagerie médicale, ce filtre permet de sélectionner une structure arborescente de vaisseaux sanguins et d'atténuer des structures plus épaisses comme une poche de sang.

En outre, ce filtre peut effectuer une première sélection permissive des pixels de l'image numérisée NUMI appartenant à une structure filiforme intéressante, suivant un critère utilisant un paramètre réglable X. Par exemple, les pixels sélectionnés sont ceux dont la valeur est supérieur à X fois la variance du bruit dans l'image filtrée par le dispositif décrit ci-dessus. Le paramètre X peut être choisi plus ou moins important selon le degré de sélection désiré. Le rôle de cette première sélection est de limiter le nombre de pixels pris en compte dans les étapes ultérieures, afin d'éviter les problèmes de surcharge de mémoire de pile.

Les figures 3a à 3d illustrent un exemple de technique destinée à l'estimation de la direction de chaque pixel d'image. La méthode consiste à diagonaliser une matrice de Hessien HES, décrite sur la figure 3d, dont les éléments diagonaux sont égaux à une première valeur Lxx et une deuxième valeur Lyy et les autres éléments sont égaux à une valeur Lxy. Pour chaque pixel de l'image numérisée NUMI, on calcule une valeur Lxx, une valeur Lyy et une valeur Lxy. La figure 3a illustre le calcul de la valeur Lxx. Pour un pixel donné de l'image numérisée NUMI, on considère un voisinage N55 de dimensions 5 pixels sur 5 pixels, centré sur ce pixel, et on effectue une convolution de ce voisinage N55 avec un masque Mxx. On obtient ainsi la valeur Lxx. La figure 3b illustre le calcul de la valeur Lyy. Pour le pixel donné de l'image numérisée NUMI, on effectue la convolution du voisinage N55 avec un masque Myy. On obtient ainsi la valeur Lyy. La figure 3c illustre le calcul de la valeur Lxy. Pour le pixel donné de l'image numérisée NUMI, on effectue la convolution du voisinage N55 avec un masque Mxy. On obtient ainsi la valeur Lxy. On effectue ensuite une diagonalisation de la matrice de Hessien HES et on retient le vecteur propre U associé à la plus petite valeur propre obtenue. Ce vecteur est le vecteur de direction tangentielle du pixel considéré. On calcule ensuite la direction de ce vecteur, de telle sorte que l'angle obtenu est un angle compris entre 0 et 180 degrés. On divise ensuite cet angle par 10 et on arrondit le résultat obtenu à l'entier supérieur. On obtient ainsi un numéro de secteur angulaire K pour le pixel considéré. Dans cet exemple, il existe 18 numéros de secteur angulaire différents. Il est possible d'utiliser un nombre différent de numéros de secteur angulaire, par exemple en divisant l'angle du vecteur U par 5 au lieu de 10.

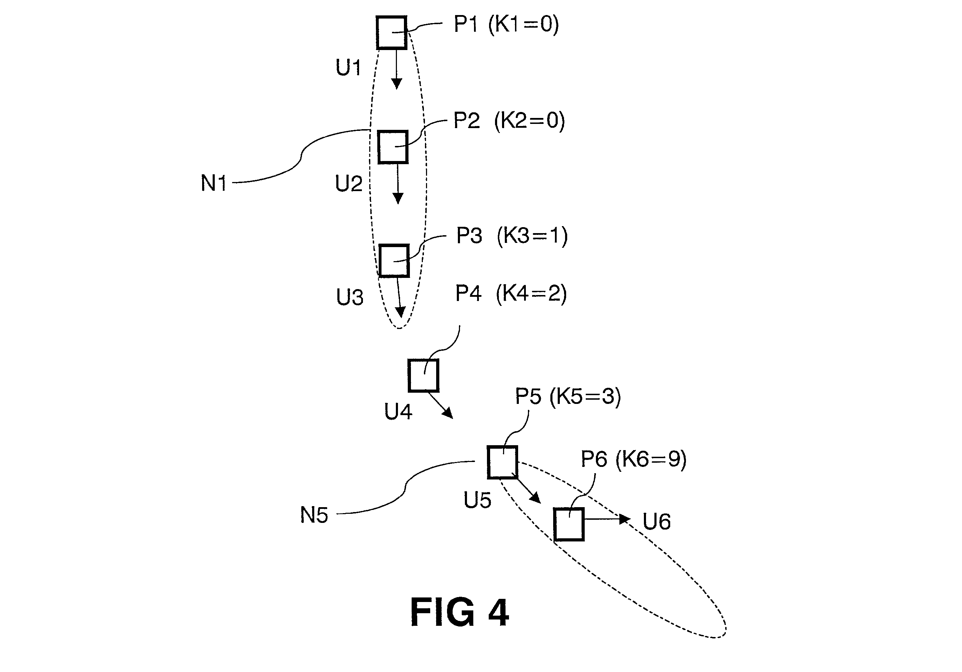

La figure 4 illustre un exemple de dispositif d'analyse de connectivité 3 basé sur la direction. L'exemple considéré s'applique sur 6 pixels de l'image de direction DIRI numérotés de 1 à 6 (P1,P6), possédant 6 vecteurs de directions associés numérotés de 1 à 6 (U1,U6) et 6 numéros de secteur angulaire associés numérotés de 1 à 6 (K1,K6). Le principe de l'analyse de connectivité est le suivant. Pour un pixel donné PN (N étant un nombre entier compris ici entre 1 et 6), on considère un voisinage NN s'étendant dans la direction du vecteur UN, sur une longueur I réglable. Dans le cas présent, deux voisinages sont représentés, symbolisés par des ellipses en pointillés. Le voisinage N1 est un voisinage du pixel P1 s'étendant dans la direction du vecteur U1. Le voisinage N5 est un voisinage du pixel P5 s'étendant dans la direction du vecteur U5. Supposons que le pixel P1 soit le premier pixel de l'image de direction DIRI traité par le dispositif d'analyse de connectivité 3. La valeur de son numéro de secteur angulaire K1 dans l'image de direction DIRI est comprise, par exemple, entre 0 et 18. Le pixel P1 est alors labellisé avec une étiquette égale à 19. Tous les pixels du voisinage N1 ayant un vecteur de direction associé proche de U1 seront labellisés avec cette même étiquette 19, on dira qu'ils appartiennent au label 19. Par exemple, on peut considérer qu'un vecteur UN d'un pixel PN du voisinage N1 est proche du vecteur U1 si les angles de ces 2 vecteurs diffèrent de moins de 10 degrés, c'est à dire si le numéro de secteur angulaire KN et le numéro de secteur angulaire K1 diffèrent au maximum d'une unité. Dans l'exemple considéré, les pixels P2 et P3 appartiennent au voisinage N1. Le numéro de secteur angulaire K2 étant égal au numéro de secteur angulaire K1 et le numéro de secteur angulaire K3 étant supérieur de une unité au numéro de secteur angulaire K1, les pixels P2 et P3 appartiendront également au label 19. La même opération est réalisée sur des voisinages des pixels P2, P3 et P4. Il est alors facile de constater que les pixels P2, P3, P4, et P5 appartiendront tous au label 19. Le pixel P6 possède un numéro de secteur angulaire K6 supérieur de 6 unités au numéro de secteur angulaire K5. Par conséquent, il appartiendra à un label différent de 19, par exemple 20. L'opération est ainsi effectuée de façon récursive sur tous les pixels de l'image de direction DIRI, jusqu'à ce que tous les pixels de l'image de direction DIRI soient labellisés. On notera qu'une fois qu'un pixel de l'image de direction DIRI a été labellisé, son étiquette ne peut plus changer lorsque l'analyse de connectivité se poursuit. On obtient ainsi l'image CONI, constituée des différents labels auxquels appartiennent les pixels.

La dernière étape de la méthode consiste à sélectionner des groupes de pixels dans l'image filtrée RFI, afin de conserver les structures filiformes intéressantes de cette image. Le principe de la sélection de groupes de pixels est le suivant. On effectue les sommes µ des contrastes (dans l'image filtrée RFI) de tous les pixels appartenant au même label dans l'image connectée CONI. On réalise cette opération pour tous les labels de l'image CONI, et on considère le maximum Y de tous les µ calculés. On ne retient que les pixels appartenant à un label tel que µ est supérieur au quotient de Y par un paramètre M réglable. On obtient ainsi l'image traitée PRCI, constituée des pixels de l'image filtrée RFI qui ont été retenus après la sélection de groupes de pixels. Le choix du paramètre M permet d'obtenir différents degrés de sélection. En effet, si M est faible (en pratique de l'ordre de quelques unités), peu de groupes de pixels de l'image filtrée RFI seront retenus dans l'image traitée PRCI. Si M est grand (par exemple de l'ordre de quelques centaines en pratique), la quasi-totalité des groupes de pixels de l'image filtrée RFI sera retenue dans l'image traitée PRCI. Il faut noter que pour des structures filiformes épaisses comme une structure arborescente de vaisseaux sanguins, la sélection de groupes de pixels donne de bons résultats du fait que les pixels voisins appartenant à une telle structure ont généralement la même direction.

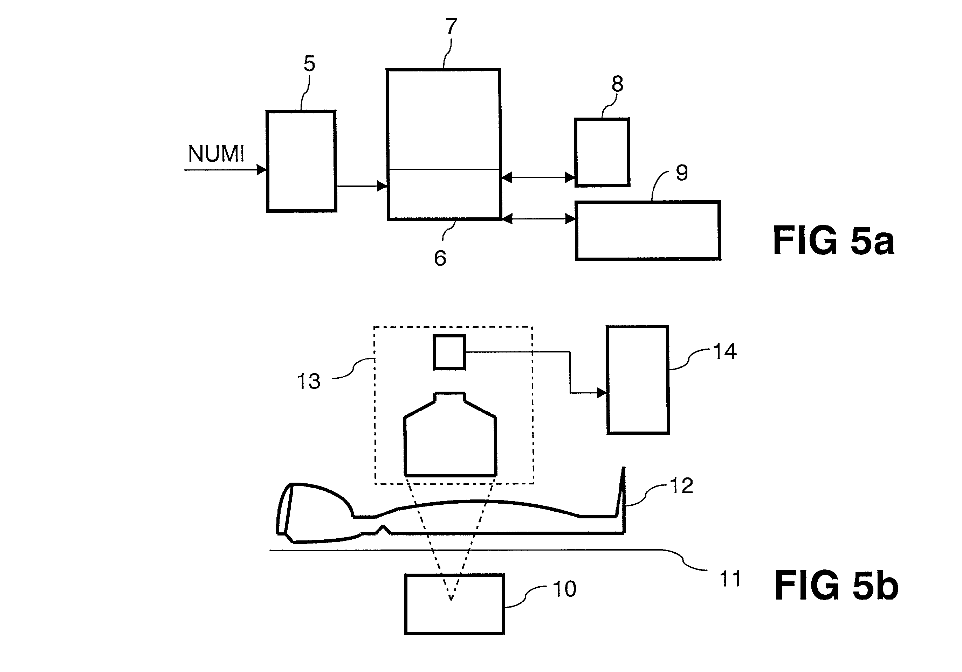

La figure 5a illustre un système de traitement d'images destiné à la mise en oeuvre de l'invention. Le système de traitement d'images comprend un dispositif 5 de traitement d'images selon l'invention, une station de travail 6, un écran 7, une souris 8 et un clavier 9.

L'image numérisée NUMI est traitée par le dispositif 5 de traitement d'images, selon la méthode décrite dans l'invention. Ce dispositif 5 de traitement d'images peut être implémenté sous la forme d'un microprocesseur programmable faisant partie de la station de travail 6 ou d'un circuit comprenant des éléments comme des filtres, des mémoires ou des opérateurs logiques destinés à réaliser les différentes étapes décrites dans l'invention. L'écran 7, la souris 8 et le clavier 9 permettent la visualisation des images traitées et permettent le réglage des différents paramètres réglables décrits dans l'invention. Le système de traitement d'images peut être relié à un dispositif de stockage afin de stocker les différentes images obtenues au cours du traitement d'images.

La figure 5b illustre un appareil d'imagerie médicale destiné à la mise en oeuvre de l'invention. L'appareil comprend une source de rayons X 10, une table 11 destinée à recevoir un patient 12 à examiner, un système optique 13 et un système de traitement d'images 14.

Le système optique 13 permet d'acquérir des images numérisées à partir des rayons X issus de la source de rayons X 10 ayant traversé le patient 12. Le système de traitement d'images 14 peut être, par exemple, le système de traitement d'images décrit sur la figure 5a.

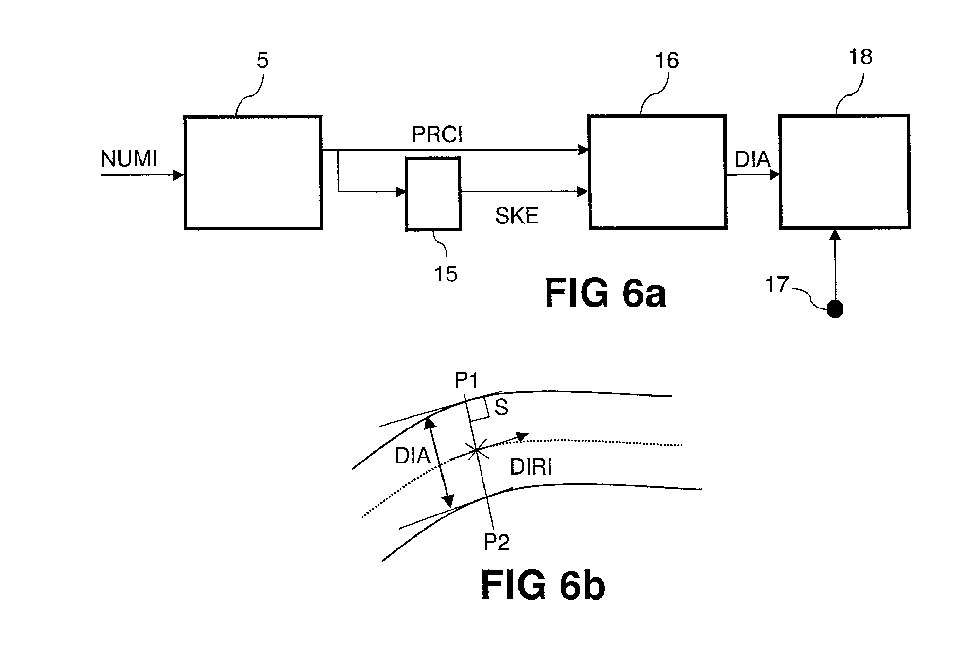

La figure 6a est un diagramme bloc illustrant une méthode de traitement d'images destinée à une détection d'anomalies d'artère, comme par exemple une sténose ou une maladie coronaire diffuse. Une telle méthode comprend une étape de sélection de structures filiformes réalisée par le dispositif de traitement d'images 5, une étape de squelettisation réalisée par un dispositif de squelettisation 15, une étape de mesure de diamètres d'artère réalisée par un dispositif 16 de mesure de diamètres d'artère et une étape de prise de décision, réalisée par un dispositif de prise de décision 18 à partir de règles 17 prédéfinies par un opérateur.

Une image numérisée NUMI, comportant au moins une artère, est traitée par le dispositif de traitement d'images 5. L'image traitée PRCI obtenue est alors traitée par le dispositif de squelettisation 15, selon une méthode connue de l'homme de métier. Une opération de squelettisation consiste à amincir un objet, tout en préservant sa topologie, jusqu'à ce que sa largeur soit réduite à un pixel. Une telle méthode est par exemple décrite dans la demande de brevet EP0840552, intitulée « Procédé de traitement d'images numériques pour l'extraction automatique d'objets en forme de rubans ». Ce procédé décrit des étapes pour extraire des pixels médians et construire des squelettes des objets par pistage. Une image SKE du squelette de l'artère est délivrée. A partir de l'image traitée PRCI, du squelette SKE et de l'image de direction DIRI, calculée par le dispositif de traitement d'images 5, le dispositif 16 de mesure de diamètres d'artère calcule des diamètres de l'artère, de la façon suivante, illustrée par la figure 6b : en chaque point S du squelette SKE, on considère les points d'artère situés sur la perpendiculaire à la direction du point S passant par S, cette perpendiculaire étant obtenue à partir de l'image de direction DIRI. On considère sur ladite perpendiculaire des points de bords P1 et P2 appartenant à l'artère et possédant au moins un voisin directement adjacent n'appartenant pas à l'artère, c'est-à-dire ayant une valeur nulle dans l'image traitée PRCI. On évalue le diamètre de l'artère comme la distance entre les deux points de bords P1 et P2, par exemple selon la norme euclidienne. On obtient ainsi un ensemble de diamètres DIA de l'artère. Le bloc de prise de décision 18 compare l'ensemble de diamètres DIA de l'artère à des règles 17 prédéfinies par un opérateur et prend une décision sur la présence éventuelle d'anomalies d'artère. Une image ABM de ces anomalies éventuelles est délivrée en sortie du dispositif de prise de décision 18.

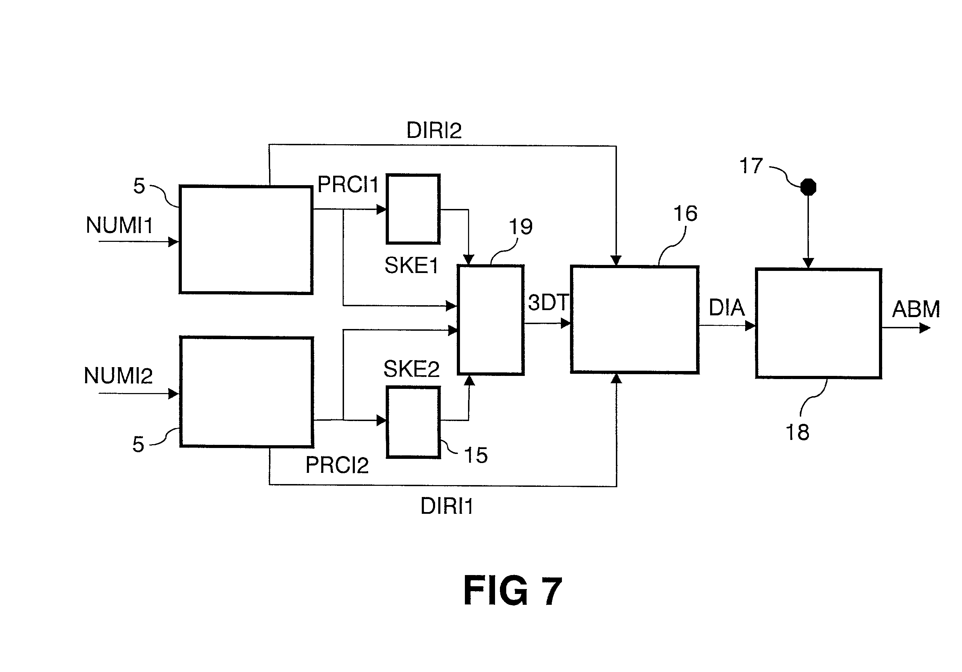

La figure 7 est un diagramme bloc illustrant une méthode de traitement d'images destinée à une détection d'anomalies d'artère en trois dimensions (3D). Une telle méthode permet d'éviter des masquages d'artère tels que des raccourcissements ou des recouvrements. Elle a pour entrée deux images numérisées distinctes de la même artère et comprend une étape de sélection de structures filiformes réalisée par le dispositif de traitement d'images 5, une étape de squelettisation réalisée par un dispositif de squelettisation 15, une étape de reconstruction d'image 3D d'artère réalisée par un dispositif 19 de reconstruction d'image 3D d'artère, une étape de mesure de diamètres d'artère réalisée par le dispositif 16 de mesure de diamètres d'artère et une étape de prise de décision, réalisée par un dispositif 18 de prise de décision à partir de règles 17 prédéfinies par un opérateur.

Deux images numérisées distinctes de la même artère NUMI1 et NUMI2 sont d'abord traitées individuellement par le dispositif 5 de traitement d'images, selon la méthode décrite dans l'invention. Les images PRCI1 et PRCI2 obtenues sont parallèlement squelettisées par le dispositif de squelettisation 15 et donnent lieu respectivement aux squelettes SKE1 et SKE2. Les images PRCI1 et PRCI2 et leurs squelettes associés, respectivement SKE1 et SKE2 sont présentés en entrée du dispositif 19 de reconstruction d'image 3D d'artère, qui forme une image 3D à partir d'au moins deux images 2D. Ce dispositif fournit une image 3D d'artère 3DT. A titre d'exemple non limitatif, un tel dispositif peut exploiter la méthode décrite dans la référence J. Chen, «3D Reconstruction of Coronary Arterial Tree to Optimize Angiographic Visualization », IEEE Transactions on Medical Imaging, Vol. 19, No. 4, April 2000. Le dispositif 18 de mesure de diamètres d'artère utilise cette image 3D d'artère 3DT conjointement avec les images de directions tangentielles DIRI1 et DIRI2, calculées par le dispositif 5 de traitement d'images, pour mesurer l'ensemble des diamètres DIA de l'artère. Comme dans le cas 2D, l'étape de prise de décision 18 détecte, à partir de l'ensemble de diamètres DIA de l'artère et de règles 17 prédéfinies par un opérateur, les éventuelles anomalies de l'artère et délivre une image ABM précisant la localisation de ces anomalies éventuelles.

La description ci-dessus en référence aux figures illustre l'invention plutôt qu'elle ne la limite. Il est évident qu'il existe de nombreuses alternatives qui rentrent dans la portée des revendications ci-jointes. A cet égard, quelques remarques sont faites ci-dessous.

Il existe de nombreuses manières pour sélectionner des structures filiformes dans une image. La figure 2 illustre seulement une mise en oeuvre possible dans laquelle le filtre 1 utilise deux voisinages d'un pixel, avec des dimensions réglables. Il est possible d'utiliser d'autres filtres pour sélectionner des structures filiformes dans une image, prenant la forme de masques par exemple.

Il existe de nombreuses manières pour effectuer une estimation de direction dans une image donnée. La figure 3 illustre seulement une mise en oeuvre possible dans laquelle l'estimation de la direction de chaque pixel s'appuie sur la diagonalisation d'une matrice de Hessien. Il est possible d'utiliser d'autres techniques pour effectuer l'estimation de la direction de chaque pixel, par exemple en utilisant une voie discrète.

Il existe de nombreuses manières pour effectuer une analyse de connectivité de pixels voisins basée sur leurs directions dans une image donnée. La figure 4 illustre seulement une mise en oeuvre possible dans laquelle l'analyse de connectivité de pixels voisins basée sur leurs directions utilise un voisinage d'un pixel s'étendant dans la direction du pixel, la taille de ce voisinage étant réglable grâce à un paramètre I. Il est possible d'utiliser d'autres techniques pour effectuer l'analyse de connectivité basée sur la direction, avec des voisinages différents.

## Revendications

1. Méthode de traitement d'images dans des images contenant des structures filiformes, comprenant en parallèle les étapes suivantes.
- une étape de filtrage desdites images ;
- une étape de décision destinée à sélectionner les pixels d'image appartenant à une structure filiforme intéressante, ladite méthode étant **caractérisée en ce que** l'étape de décision comprend en parallèle une sous-étape d'estimation de la direction de chaque pixel d'image ainsi qu'une sous-étape d'analyse de connectivité de pixels voisins basée sur leurs directions à la sortie de la sous-étape d'estimation de la direction de chaque pixel d'image et une sous-étape de sélection de groupes de pixels, en fonction du résultat de la sous-étape d'analyse de connectivité de pixels voisins basée sur leurs directions, à la sortie de l'étape de filtrage.

2. Méthode de traitement d'images selon la revendication 1, **caractérisée en ce que** ladite étape de filtrage desdites images comprend une sous-étape de sélection de pixels, les pixels d'une image sélectionnés étant ceux dont le contraste est supérieur à X fois la variance du bruit dans l'image, X étant un paramètre réglable par l'utilisateur.

3. Méthode de traitement d'images selon l'une des revendications 1 ou 2, **caractérisée en ce que** ladite étape de filtrage desdites images utilise deux voisinages (N1) et (N2) d'un pixel donné, l'écart (GAP) entre ces voisinages étant réglable par l'utilisateur.

4. Méthode de traitement d'images selon la revendication 3, **caractérisée en ce que** la hauteur (H) et la longueur (L) desdits voisinages sont réglables par l'utilisateur.

5. Méthode de traitement d'images selon l'une des revendications 1 à 4, **caractérisée en ce que** ladite sous-étape d'analyse de connectivité de pixels voisins basée sur leurs directions utilise un voisinage d'un pixel donné, ce voisinage s'étendant dans la direction du pixel considéré, déterminée lors de ladite sous-étape d'estimation de la direction de chaque pixel d'image.

6. Méthode de traitement d'images selon la revendication 5, **caractérisée en ce que** la longueur dudit voisinage est réglable par l'utilisateur.

7. Méthode de traitement d'images selon l'une des revendications 1 à 6, **caractérisée en ce que** ladite sous-étape de sélection de groupes de pixels utilise un paramètre M réglable par l'utilisateur, ce paramètre M permettant de calculer la somme minimale des contrastes des pixels d'un groupe donné requise pour que ce groupe soit sélectionné.

8. Méthode de traitement d'images selon l'une des revendications 1 à 7, destinée à une détection d'anomalies d'artère, **caractérisée en ce qu'**elle comprend en outre :
- une étape de squelettisation pour extraire un squelette de structures filiformes,
- une étape de mesure de diamètres d'artère,
- une étape de prise de décision basée sur les diamètres et des règles prédéfinies par un opérateur.

9. Méthode de traitement d'images, destinée à une détection d'anomalies d'artère en trois dimensions, ayant pour entrées au moins une première image et une deuxième image numérisée d'une même artère, **caractérisée en ce qu'**elle comprend en série ;
- une méthode de traitement d'images selon l'une des revendications 1 à 7, appliquée à la première et à la deuxième image numérisée, pour donner une première et une deuxième image traitée,
- une étape de squelettisation, appliquée à la première et à la deuxième image traitée, pour extraire un squelette de structures filiformes de la première et un squelette de structures filiformes de la deuxième image traitée,
- une étape de reconstruction d'image 3D d'artère, à partir de la première et la deuxième image traitée et de leurs squelettes, pour donner une image 3D d'artère,
- une étape de mesure de diamètres d'artère, à partir de l'image 3D d'artère,
- une étape de prise de décision basée sur les diamètres et des règles prédéfinies par un opérateur.

10. Programme d'ordinateur exécutable par l'intermédiaire d'un processeur, destiné à la mise en oeuvre d'une méthode de traitement d'images selon l'une des revendications 1 à 9.

11. Système de traitement d'images comprenant un ordinateur destiné à la mise en oeuvre d'un programme d'ordinateur selon la revendication 10 ou un circuit destiné à la mise en oeuvre de la méthode de traitement d'images selon l'une des revendications 1 à 9, un dispositif de projection des images traitées selon ladite méthode et éventuellement un dispositif de stockage desdites images.

12. Appareil d'imagerie médicale comprenant un dispositif d'acquisition d'images et un système de traitement d'images selon la revendication 11.
